# EUROPEAN PATENT APPLICATION

(11) **EP 2 716 581 A1**
(43) Date of publication of application: **09.04.2014**
(21) Application number: 12187700.5
(22) Date of filing: 08.10.2012
(51) Int. Cl.: B65G 27/08, B65G 65/44

(54) **Vibratory floor section**

(71) Applicant: Portasilo Limited, York, North Yorkshire YO32 9PR (GB)
(72) Inventor: Slee-Smith Peter, York, North Yorkshire YO32 9PR (GB)
(74) Representative: Foot, Paul Matthew James

(57) **Abstract**

A vibratory floor section (10) comprising:
a generally planar base (12) ;
a top plate (14) arranged to overlie at least a portion of the base;
a vibration mechanism (16) configured to vibrate the top plate (14) in relation to the base (12)
at least one resilient device (70) configured to support the top plate (14) on the base(12) , the resilient device having a first end mounted to the base and a second end supporting the top plate, enabling the top plate to adopt a lifted state relative to the base when substantially unloaded and a fully depressed state when loaded above a predetermined amount; and
wherein the first end is mounted below an upper level of the base(12) , such that when the top plate (14) is fully depressed, the resilient device (70) is not fully compressed.

## Description

### FIELD OF THE INVENTION

The present invention relates to a vibratory floor section, and to a vibratory floor.

### BACKGROUND OF THE INVENTION

It is known to store bulk materials in pellet or granular form in storage structures such as silos. Such materials are generally removed from storage structures via floor aperture(s) or conveyor(s), using gravity to aid removal. It is usual for the structure floor to be sloped towards the aperture or conveyor, again to aid dispensing through gravity.

The slope of the floor is generally not sufficient to ensure that all of the material held within the structure can be removed completely under gravity, i.e. the angle of the floor is less than the angle of repose of the material. This maximises the capacity of the structure, but prevents the complete removal of material under gravity.

It is therefore known to provide a sloped vibratory floor. Such floors can be vibrated to dislodge material supported thereon, overcoming bridging and ensuring substantially complete emptying of the storage structure.

One known vibratory floor, shown in US2009/0260539, is provided in pre-assembled modules, and comprises a top plate supported on the periphery of a base. The top plate is supported by conical springs positioned around the base periphery and configured to be fully compressible. A transverse stiffener is used to disperse vibration throughout the top plate.

The present applicant has recognised that there are disadvantages to such an arrangement. The pre-assembled nature of the modules may lead to difficulties during fitting, as the cabling for the electric motor used to generate vibrations is not readily accessible, and foundation bolts for anchoring the modules must be fixed externally. Further, maintenance cannot be completed in-situ as the peripheral seal around the top plate can only be detached if the individual module is removed. Conical springs are expensive, and can require the use of expensive alloys to meet durability needs. Performance of conical springs is limited by the smallest coils. There are limited options about the base periphery for spring positioning, making it difficult to adjust the modules for different applications.

The present invention seeks to overcome or at least mitigate the problems of the prior art.

### SUMMARY OF THE INVENTION

According to the present invention there is provided a vibratory floor section comprising: a generally planar base; a top plate arranged to overlie at least a portion of the base; a vibration mechanism configured to vibrate the top plate in relation to the base; at least one resilient device configured to support the top plate on the base, the resilient device having a first end mounted to the base and a second end supporting the top plate, enabling the top plate to adopt a lifted state relative to the base when substantially unloaded and a fully depressed state when loaded above a predetermined amount; and wherein the first end is mounted below an upper level of the base, such that when the top plate is fully depressed, the resilient device is not fully compressed.

This arrangement prevents full compression of the at least one resilient device, meaning that lower cost springs may be successfully used with sufficiently durability.

The resilient device may be compressed to less than 80% of its maximum, preferably less than 70%, more preferably less than 60%, more preferably less than 50% and more preferably less than 40%.

The or each resilient device may be mounted such that the load transmitted from the top plate via the device is directed in use predominantly to a foundation or support upon which the section is mounted, without being transmitted to a main structure of the base. This enables a lower strength and weight base to be used.

A stop may be configured to limit movement of the top plate towards the base and transmit load from the top plate when in contact with the stop to a foundation or support upon which the section is mounted, without being transmitted to a main structure of the base. The base advantageously comprises the stop. The floor section may further comprise at least one resilient device housing, which may comprise the stop. The base may comprise insulation material, and/or a frame which may be configured to house the insulation material. The insulation material may comprise the stop.

The insulation material may define at least one aperture configured to receive the resilient device housing, and the resilient device housing may comprise a lip configured to abut an upper surface of the insulation material.

The resilient device may be a spring, which may be a helical spring, preferably a parallel-sided helical spring.

The floor section may have a first end and a second end and a plurality of resilient devices, wherein an aggregate spring rate of a resilient device or devices at the first end is greater than an aggregate spring rate of a device or devices at the second end, preferably wherein there may be a greater number of resilient devices towards the first end than towards the second end. The vibration mechanism may be proximal the floor section second end, and/or the floor section first end may be configured to be raised above the floor section second end when the floor section is installed for use.

The top plate may be detachably connected to the base. The floor section may further comprise a peripheral seal between the top plate and the base, wherein the seal may be detachably connected to at least one of the base and the top plate by an attachment removable from above the top plate. The seal may be bonded to the top plate, preferably by adhesive, and/or the base may comprise at least one captive nut configured for securement of the seal to the base by at least one complementary threaded fastener.

The vibration mechanism may be positioned on an upper side of the top plate. The top plate may comprise a substantially circular stiffener plate, which may be positioned on an underside of the main body of the top plate substantially opposite the vibration mechanism. The stiffener plate may be connected to the vibration mechanism. The vibration mechanism may comprise a cover, and the stiffener plate may be connected to the cover.

The frame may comprise an inner frame arranged between panels of insulation material, and an outer frame arranged about the periphery of the insulation material. The insulation material may define a cavity configured to provide clearance for the stiffener plate.

A second aspect of the present invention provides a vibratory floor section comprising a base; a top plate supported by the base; and a vibration mechanism configured to vibrate the top plate in relation to the base; wherein the top plate is detachably connected to the base by an attachment removable from above the top plate.

The base can advantageously be installed without the top plate, and the top plate later attached. The top plate can be removed and replaced for maintenance purposes, and the base and top plate can be transported separately to one another.

The floor section may further comprise a peripheral seal between the top plate and the base, wherein the seal may be detachably connected to the base. The seal may be bonded to the top plate. The base may comprise at least one captive nut configured for securement of the seal to the base by at least one complementary threaded fastener. The floor section may further comprise a clamp strip arranged to clamp the seal to the base in conjunction with the at least one fastener. The seal may be of polyurethane or similar.

A third aspect of the present invention provides a vibratory floor section comprising a base; a top plate supported by the base; and a vibration mechanism configured to vibrate the top plate in relation to the base; wherein the top plate comprises a stiffener plate, which stiffener plate extends less than a full width of the top plate. The stiffener is advantageously substantially circular.

The circular stiffener plate promotes even vibration throughout the top plate.

The vibration mechanism may be positioned on an upper side of the top plate, and the stiffener plate may be positioned on an underside of the top plate substantially opposite the vibration mechanism. The stiffener plate may be connected to the vibration mechanism. The vibration mechanism may comprise a cover, and the stiffener plate may be connected to the cover.

A fourth aspect of the present invention provides a vibratory floor section comprising a base; a top plate supported by the base; a vibration mechanism configured to vibrate the top plate in relation to the base; and at least one resilient support to support the top plate. The base member advantageously further comprises insulation material

The base may be manufactured from at least two base panels joined by an inner frame, the inner frame further providing a conduit for cabling, e.g. electrical cabling to the vibration mechanism. The inner frame may support the insulation material, and an outer frame may further be provided to support the insulation material.

At least one stop may be mounted to the insulation material and extend through the insulation material, so as to direct any imposed load from the top plate predominantly directly through the stop to a support or foundation under the floor section in use.

The floor section may further comprise at least one resilient device housing. The resilient device housing may comprise the stop, and/or load from the top plate may be directed to the insulation material.

According to a fifth aspect of the present invention, there is also provided a vibratory floor comprising two or more floor sections as described above.

According to a sixth aspect of the present invention, there is further provided a method of installing a vibratory floor comprising the steps of:
a) providing a vibratory floor section comprising a base, a top plate and a vibration mechanism configured to vibrate the top plate in relation to the base;
b) fastening the base to a floor surface;
c) subsequently fastening the top plate to the base.

The method may include the step of assembling the base from separate panels prior to step b).

The method may further comprising a step e) prior to step c) of installing cabling on the base

### BRIEF DESCRIPTION OF THE DRAWINGS

Other aspects and preferred features of the invention will be readily apparent from the claims and following description of preferred embodiments made, by way of example only, with reference to the following drawings, in which:
Figure 1 is a perspective view of a vibratory floor section according to a first embodiment of the present invention;
Figure 2 is a perspective view of a top plate of the vibratory floor section of the embodiment of Figure 1 without a vibration mechanism cover;
Figure 3 is an underside view of a top plate of the vibratory floor section of the embodiment of Figures 1 and 2;
Figure 4 is a plan view of a base of the vibratory floor section of the embodiment of Figures 1 to 3;
Figure 5 is a perspective view of a panel of the base of the embodiment of Figures 1 to 4;
Figure 6 is a perspective view of an inner frame of the base of the embodiment of Figures 1 to 5;
Figure 7 is a perspective view of an outer frame of the base of the embodiment of Figures 1 to 6;
Figure 8 is a cross-sectional detail view through the base of the embodiment of Figures 1 to 7 along line x-x; and
Figure 9 is a cross-sectional detail view through the base of the embodiment of Figures 1 to 8 along line y-y.

### DETAILED DESCRIPTION OF EMBODIMENT(S)

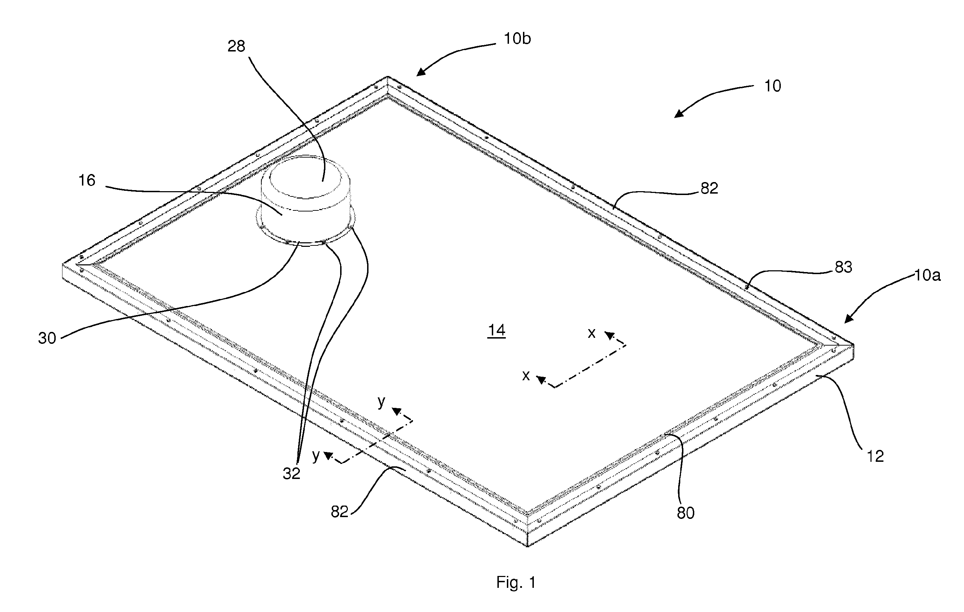

A vibratory floor section is generally indicated at 10 in Figure 1. The floor section 10 is intended to be laid in conjunction with other similar floor sections 10 in a regular array to form a vibratory floor for a storage area. In this embodiment, the floor section 10 is intended for use in a silo with sloping floors configured to direct stored material to one or more conveyors in the floor. However, the floor section 10 is suitable for use in other storage areas, such as ship's hulls. The floor section 10 is intended for use with bulk pellet materials such as wood pellets, although the section 10 can be used with other suitable powder, granular, chipped or pellet type materials.

The floor section 10 comprises a generally planar base 12 and a top plate 14. The top plate 14 is supported on the base 12 by a series of resilient devices (as described in more detail below), and is vibrated in relation to the base 12 by a vibration mechanism 16. The floor section 10 of this embodiment is about 3m x 2.1m, though it may be of different dimensions for alternative applications.

The top plate 14 is in this embodiment substantially rectangular, as is the floor section 10. Other shapes of floor section 10 may be used according to the required footprint of the vibratory floor, in which case other shapes of top plate 14 may be used. The top plate 14 is in this embodiment of 3mm duplex 2101 stainless steel, though other suitable materials and/or other suitable material thickness may be used. The top plate 14 of this embodiment is about 2.8m x 1.9m, though it may have different dimensions in alternative embodiments.

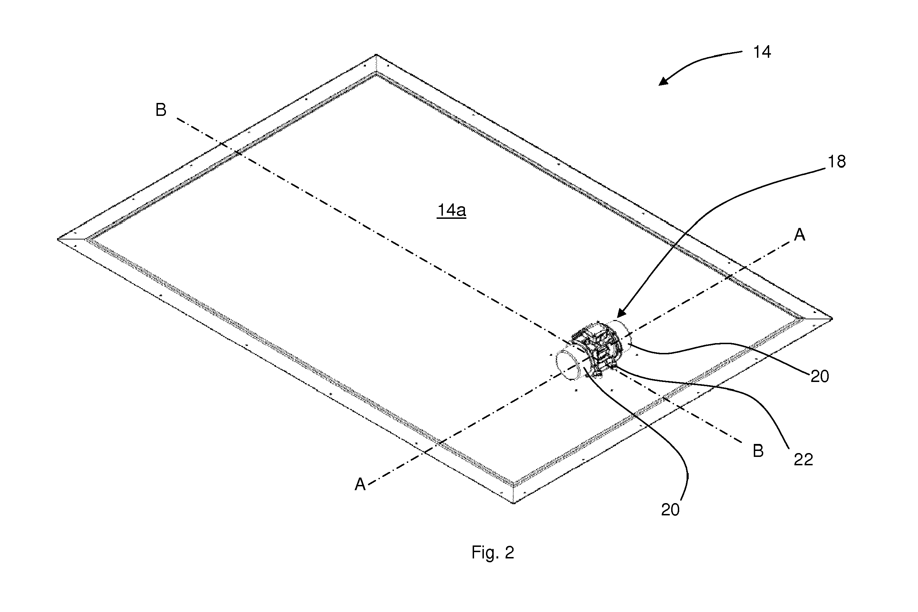

The vibration mechanism 16 comprises a vibratory motor 18 with eccentric weights (not visible, but within covers 20), e.g. as shown in Figure 2. An example of a suitable vibratory motor is produced by OMB srl of Corlo, Italy. The eccentric weights 20 can be adjusted to increase or decrease the intensity of vibration of the top plate 14.

The motor 18 is fastened to an upper side 14a of the top plate 14 with bolts 22. The motor 18 is orientated so that a longitudinal axis A-A through a shaft (not shown) supporting the eccentric weights 20 is substantially transverse to a longitudinal axis B-B of the top plate 14. This orientation promotes vibration of the entire top plate 14 along axis B-B in use.

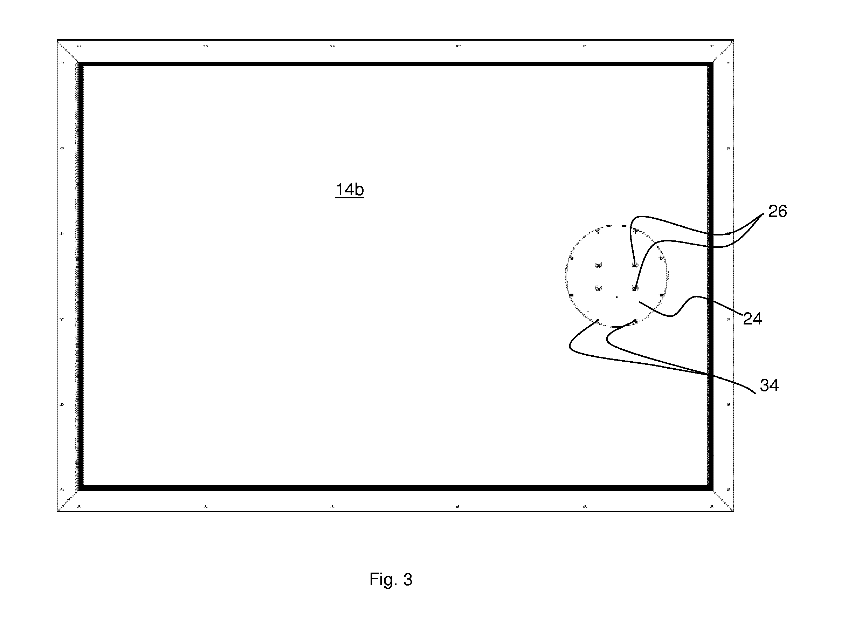

The top plate 14 further comprises a substantially circular stiffener plate 24 (e.g. as shown in Figure 3). In this embodiment the stiffener plate 24 is of 5mm steel, although other materials and/or other material thickness may be used.

The stiffener plate 24 is positioned on an underside 14b of the top plate 14 opposite the vibratory motor 18. The stiffener plate 24 is relatively shallow, so minimises interference with the base 12. The stiffener plate 24 comprises a series of captive nuts 26 corresponding to the bolts 22. Throughout this embodiment captive nuts comprise rivet bushes pressed into their respective components, although other types of captive nut may be used. The bolts 22 extend through a washer (not shown), the top plate 14 and the captive nuts 26 to secure the motor 18 to the stiffener plate 24. Load is thus transmitted from the motor 18 to the stiffener plate 24. Throughout this embodiment wedge-locking washers such as those produced by Nord-Lock Limited of Tidworth, UK are used, although other suitable washers may be used.

A cover 28 (shown in Figure 1) fastened to the top plate 14 over the motor 18 protects the motor 18 from debris and impact. The cover 28 is in this embodiment of spun steel, although other suitable materials and/or other material thickness may be used, and the cover 28 may be formed by pressing. The cover 28 is substantially cylindrical to enable material to flow past, and is open at a first end 28a. The first end 28a comprises a peripheral flange 30.

The stiffener plate 24 comprises a second series of captive nuts 34 about its circumference. The flange 30 defines a series of apertures (not shown) configured to receive bolts 32 by which the cover is fastened to the top plate 14. The bolts 32 extend through the top plate 14, washers (not shown) and are received in the captive nuts 34, so securing the cover 28 to the stiffener plate 24 and top plate. Other types of fastener may be used in alternative embodiments.

The structural link between the cover 28, the stiffener plate 24 and the motor 18 provides reinforcement of the immediate area excited by the motor 18, and improves transmission of vibration about the top plate 14. The circular shape of the stiffener plate 24 and the cover 28, combined with its particular location on the top plate 14, promote even distribution of vibration throughout the top plate 14.

Due to the arrangement of the vibration mechanism 16 and the stiffener plate 24, the top plate 14 has few bolts or other projections protruding from the upper side 14a. This advantageously decreases the likelihood of stored material catching on such projections.

The top plate 14 is supported on a silo floor by the base 12. The base 12 comprises a frame 36 which is configured to house insulation material 38. The insulation material 38 insulates the top plate 14 from the ground surface upon which the floor section 10 is laid, so that the risk of condensation forming on the top plate 14 and affecting the properties of the stored material is minimised.

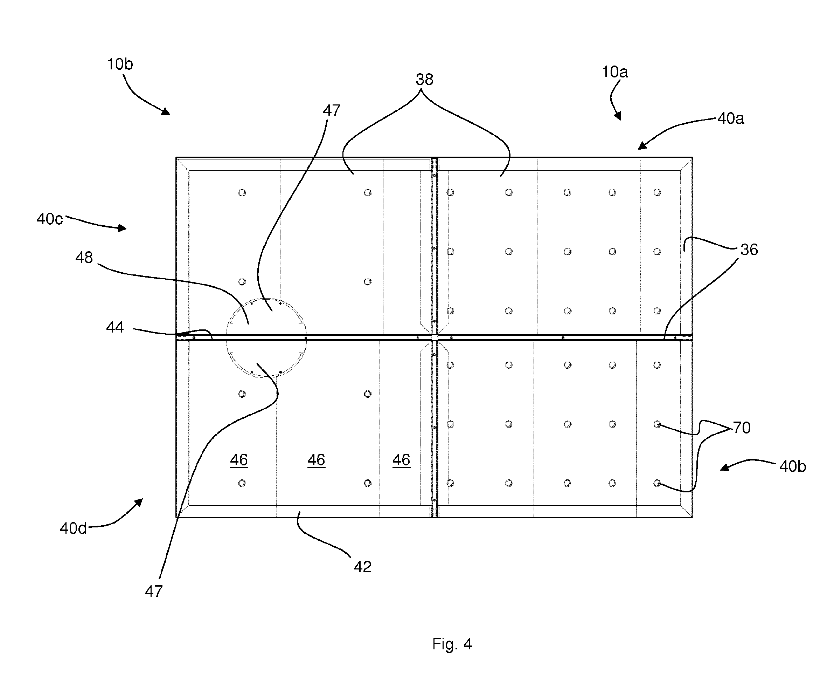

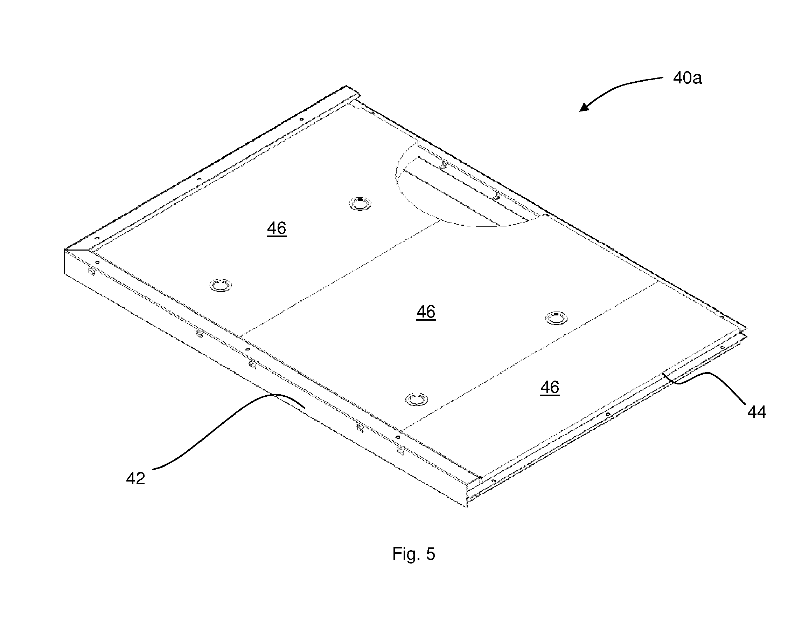

The base 12 is made up of a number of separate panels 40 for ease of transportation and installation without the need for mechanical lifting equipment. With reference to Figures 4 and 5, the base 12 of this embodiment comprises four substantially rectangular panels 40a, 40b, 40c, 40d configured to be fastened together to form the base 12. Each panel 40a-d comprises an outer frame portion 42 along two adjacent sides and an inner frame portion 44 along the remaining two adjacent sides. The outer frame portion 42 and the inner frame portion 44 are fastened to one another (as described below) and surround and secure together insulation material 38 in the form of separate insulation boards 46.

The insulation boards 46 of this embodiment are of polyurethane foam. An example of suitable insulation boards are Floormate^{RTM} produced by The Dow Chemical Company Limited of Staines, UK. These boards 46 have a compressive strength of around 700kN/m², although in other embodiments boards of higher or lower compressive strength may be used, according to the application. In this embodiment each panel 40a-d comprises three boards 46 orientated transverse to the longitudinal axis B-B. However, different numbers of boards 46 in different configurations may be used.

The floor section 10 comprises a first end 10a and a second end 10b (see Figure 4). Two of the panels 40a, 40b adjoin the first end 10a, whilst two of the panels 40c, 40d adjoin the second end 10b. The panels 40c, 40d adjoining the second end 10b each define a substantially semi-circular aperture 47 in the insulation material 38, so that when fitted together the panels 40c, 40d define a substantially circular cavity 48. The cavity 48 extends the full depth of the insulation material 38, and is configured to receive the stiffener plate 24 when the floor section 10 is fully assembled (as described below). In alternative embodiments (not shown) the cavity 48 may extend only partway through the insulation material 38, as the stiffener plate 24 is relatively shallow.

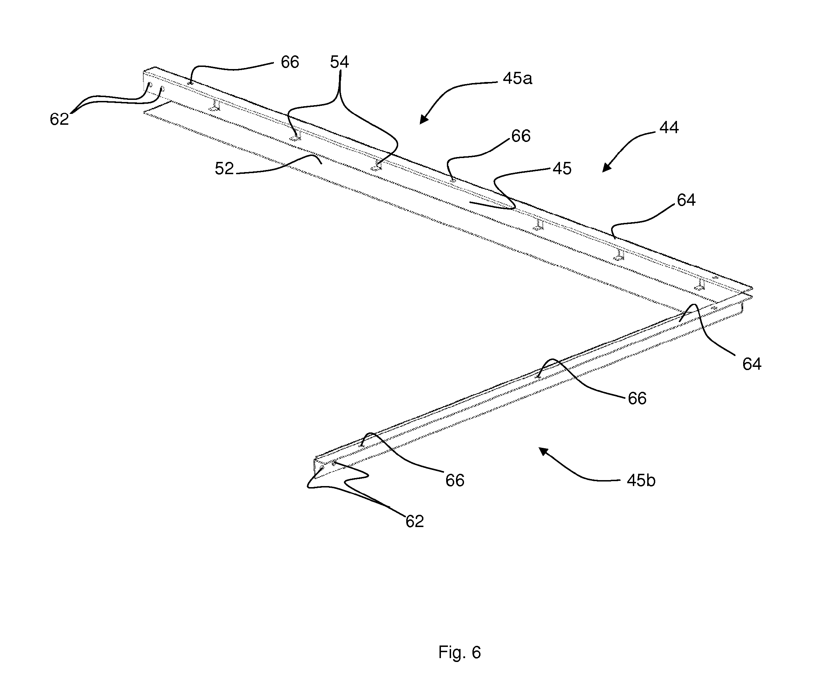

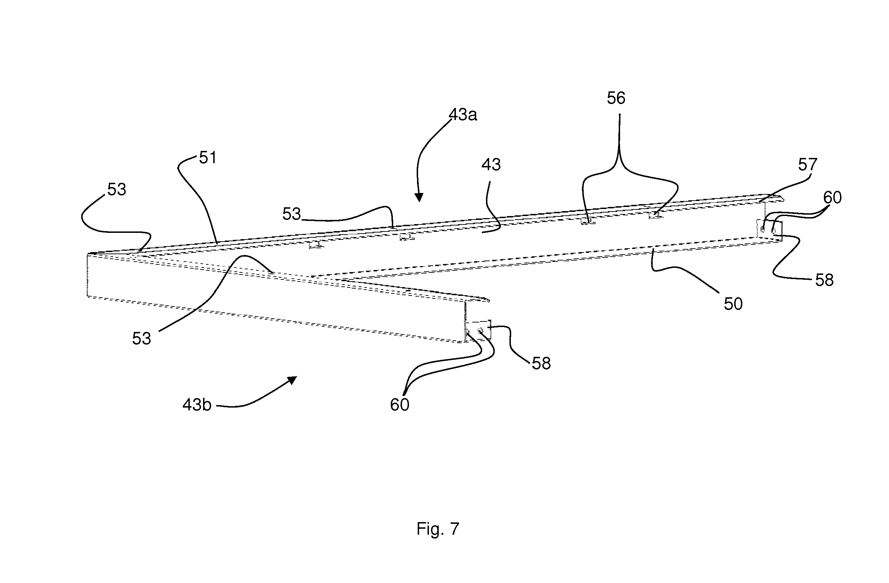

Figures 6 and 7 show the inner and outer frames 44, 42 respectively. The inner and outer frames 44, 42 of this embodiment are of folded sheet metal such as mild steel. Each frame 42, 44 comprises an L-shaped body 43, 45 in plan. Each body 43, 45 has a long side 43a, 45a and a short side 43b, 45b, so that they each extend along two sides of the respective substantially rectangular panel 40a-d. The inner frame 44 is shallower than the outer frame 42, and in this embodiment is shallower than the insulation material 38. The inner frame 44 is shallow enough to provide clearance for the stiffener plate 24 when the floor section 10 is assembled.

Both frames 44, 42 comprise an inwardly-extending base flange 50, 52 configured to support the insulation boards 46. The base flange 50 of the outer frame 42 extends fully along the length of the body 43. The base flange 52 of the inner frame 44 extends most of the length of the body 45, with a gap at each end so that when the bodies 43, 45 are fitted together to form a substantially rectangular frame 42, 44 the base flanges 50, 52 meet.

The inner frame 44 comprises a series of tabs 54 extending inwardly from and substantially perpendicular to the long side 45a of the body 45. The tabs 54 are cut from the body 45 and folded inwardly. The tabs 54 are configured to extend into the insulation material 38, securing the insulation boards 46 in place.

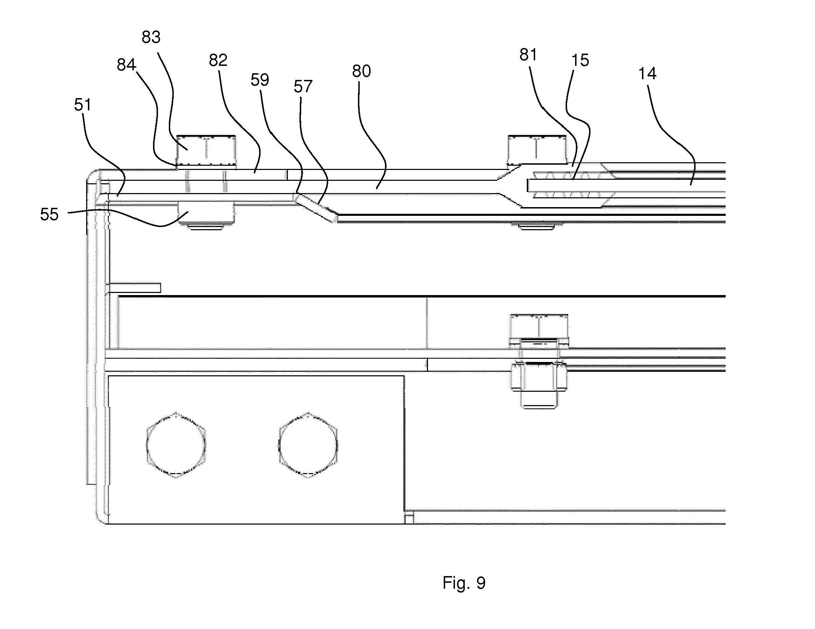

The outer frame 42 has a horizontal top flange 51 extending inwardly along the length of the body 43. The top flange 51 defines a series of apertures 53, each with a corresponding captive nut 55 (see Figure 9) on the underside of the flange 51. The top flange 51 has a peripheral lip 57 extending downwardly from the remainder of the flange 51 at an angle of approximately 20° to the horizontal. The lip 57 is curved where it joins the remainder of the flange 51, providing a smooth bend 59.

The outer frame 42 includes a series of tabs 56 extending inwardly from and substantially perpendicular to the long side 43a of the body 43. Similarly to the inner frame tabs 54, the tabs 56 are cut from the body 43 and folded inwardly. The tabs 56 are configured to extend over the insulation material 38, i.e. so that the insulation boards 46 fit between the tabs 56 and the base flange 50. The tabs 56 thus secure the insulation boards 46 in place.

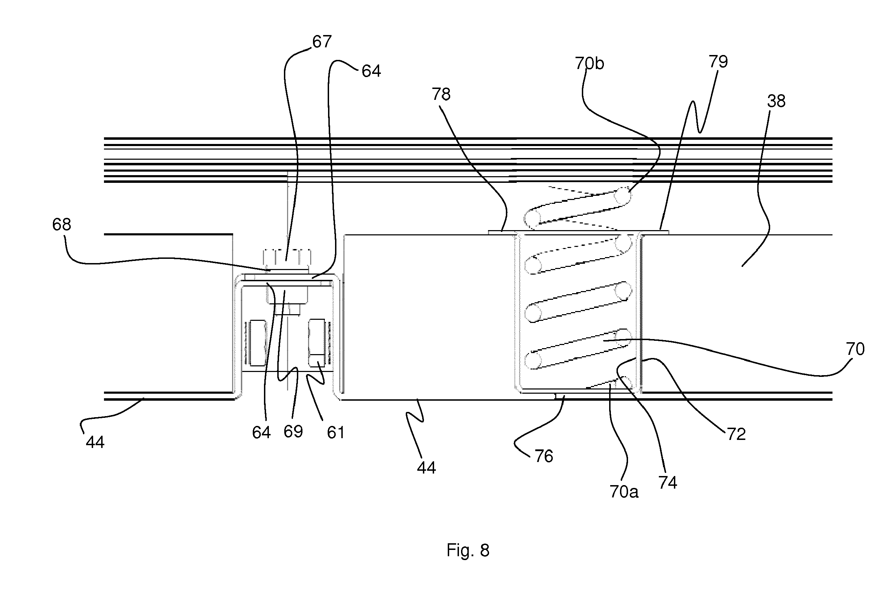

The outer frame 42 further includes a tab 58 at each end of the base flange 50, extending upwardly perpendicular to the base flange 50. The tabs 58 each define two apertures 60 with corresponding captive nuts (not shown) on the inward side of the tab 58. The body 45 of the inner frame 44 comprises two corresponding apertures 62 at either end. A bolt 61 extends through a washer (not shown) and through each pair of apertures 60, 62, fastening the inner and outer frames 44, 42 together (e.g. as shown in Figure 8).

The inner frame 44 further includes an outwardly-extending top flange 64 along each of the sides 45a, 45b. The top flanges 64 define a series of apertures 66, and are configured to allow fastening of the panels 40a-d together with bolts 67 extending through washers 68 and through the apertures 66. The top flanges 64 of panels 40a, 40c are lower than those of panels 40b, 40d (or vice versa), to allow the connecting flanges 64 to overlie one another (see Figure 8). The top flanges 64 of panels 40a, 40c (or of panels 40b, 40d if they are the lower) include captive nuts below each aperture 66 configured to receive the bolts 67.

As such, assembly of the base 12 is a simple matter of bolting the four panels 40 together, which may be done in-situ at the storage structure, or at a remote location.

The top plate 14 is supported on the base 12 with the vibration mechanism 16 proximal the second end 10b of the floor section 10 (intended to be the lower end when installed), e.g. as shown in Figure 1. The stiffener plate 24 is positioned above the cavity 48, so does not contact the insulation material 38. The inner frame 44 is low enough to provide clearance for the stiffener plate 24, as described above.

The base 12 further comprises a series of resilient devices 70 configured to support the top plate 14. In this embodiment the resilient devices are in the form of parallel-sided helical springs 70, though other suitable resilient devices or other types of spring may be used. The springs 70 of this embodiment are of stainless steel, which is relatively low cost, although other suitable materials may be used.

Each spring 70 is supported by housing in the form of a substantially cylindrical cup 74 having a closed end 76 and an open end 78. The insulation material 38 defines a series of through-apertures 72 (see Figure 8), each configured to receive a cup 74. The apertures 72 are in this embodiment water-cut through the insulation boards 46, although alternative cutting methods may be used. The open end 78 of the cup 74 has an outwardly-extending lip 79 configured to overlie the upper surface of the insulation material 38, so as to locate the cup 74. Each spring 70 has a first end 70a resting on the closed end 76 of a cup 74, and a second end 70b extending upwardly beyond the insulation material 38 to contact and support the underside 14b of the top plate 14.

When the top plate 14 is carrying no material, the springs 70 are in a first, extended position (e.g. as shown in Figure 8) and the top plate is in a lifted state relative to the base. In this position the second end 70b of each spring extends beyond the insulation material 38, as described above. If a sufficient load is introduced on to the top plate 14 the springs 70 compress until the top plate 14 is in a depressed position and comes to rest on the base 12 and the springs 70 are in a second position. In this embodiment the top plate 14 comes to rest on the open ends 78 of the cups 74, which thus provide a stop for the top plate 14. The cups 74 thus prevent the stiffener plate 24 coming into contact with the inner frames 42.

Under a full load the top plate 14 may come into contact with and be supported by the insulation material 38. The insulation material can thus act as a stop for the top plate 14. In alternative embodiments the stop will be provided by the cups 74 alone, or by the insulation material 38 alone.

As the springs 70 extend to the closed end 76 of each cup 74 they cannot be fully compressed when in the second position. In this embodiment the springs 70 are configured to be approximately 40% compressed when in the second position, although they may be configured to be more or less compressed.

In this embodiment the springs 70 are held in position by the cups 74, but are not fastened to the cups 74. However, in alternative embodiments the springs 70 may be fastened to the closed ends 76 of the cups 74.

When load is applied to the top plate 14 and so to the springs 70, load is transferred to the cups 74. The cups 74 are dimensioned so as to abut the silo foundation (not shown), and load is thus transferred thereto. The majority of the load is not therefore transmitted through the main structure of the base 12, allowing the base 12 to be relatively lightweight. The insulation boards 46 dampen the vibration transferred through the cups 74, protecting the frame 36 from over-vibration that could lead to damage and fatigue.

When emptying a storage structure it is most efficient if material is initially removed by gravity. This leaves a "wedge" of material that represents the difference between the angle of repose of the material (say 40°), and the slope angle of the floor (say 10°), with material getting progressively deeper further away from the conveyor or aperture it is removed from. Rather than vibrating all floor sections simultaneously, it is most efficient to start vibrating those nearest the removal conveyor/aperture until all material is removed therefrom, and work progressively away from conveyor/aperture.

The applicants consider it desirable that when a particular floor unit is to be vibrated to remove the "wedge" starting at its second end 10b, the springs 70 are of sufficient strength to lift the entire top plate 14 clear of the base 12. In this way, stresses on the plate are minimised during vibration.

It will be apparent that in a typical silo with a floor sloping towards a dispensing aperture or conveyor, once material has been removed by gravity less load is taken at the (lower) end closer to the aperture (second end 10b in this embodiment). Less support, either from weaker or a lower density of springs 70, therefore, are required at this end to lift the plate 14. The floor section 10 allows different configurations of the springs 70 depending on the application for which it is used, e.g. depending on the distribution of load taken by the top plate 14. The apertures 72 are simply cut in different locations in the insulation material 38 to create a different spring configuration.

One potential spring layout is shown in Figure 4. The springs 70 are laid out in rows that are closest together towards the first end 10a, where the maximum load is taken. The rows become further apart towards the second end 10b, to correspond with the decrease in load.

Stiffer springs 70 can be used towards the first end 10a to take the increased load. In this embodiment, for example, the row of springs 70 nearest the second end 10b comprises four springs 70 with a first, lower spring rate of e.g. 20N/mm to 40N/mm. The remaining rows comprise thirty-four springs 70 with a second, higher spring rate of e.g. 30N/mm to 50N/mm.

The arrangement of the springs 70 is also varied to optimise dispensing of for particular materials of various densities, angles of repose etc. The above positioning of springs 70 of different stiffness, in conjunction with vibration of the motor 18 at a frequency of about 25Hz or 30Hz, leads to suitable vibration of the top plate 14 for this application, i.e. for dispensing wood pellets from a silo. Other frequencies, the level of eccentricity of the motor weights, spring rates and spring spacings may be used in alternative embodiments to achieve the desired combination of plate support and vibration intensity across the plate 14, whilst minimising stresses.

The top plate 14 is detachably connected to the base 12. The top plate 14 has a peripheral seal 80 through which the top plate 14 is detachably connected to the base 12. In this embodiment the seal 80 is of extruded polyurethane (or suitable other materials), and is flexible so as to allow movement between the top plate 14 and the base 12. The seal 80 comprises a forked edge 81 which extends either side of the top plate 14 (e.g. as shown in Figure 9). The seal 80 is adhesively bonded to an outer edge 15 of the top plate 14 at the forked edge 81 using a suitable polyurethane adhesive (or other suitable adhesive). At the corners the seal 80 is mitred and secured to the adjacent strips at right angles thereto by heat welding. As such, a complete peripheral seal is formed.

The seal 80 extends over the top flange 51 of the outer frame 42. The smooth bend 59 of the lip 57 of the top flange 51 prevents excessive wear of the seal 80 as the top plate vibrates vertically and laterally. The seal 80 is clamped to the base 12 by four clamp strips 82 which extend along on all four sides of the floor section 10. in this embodiment the clamp strips 82 are of mild steel, although other suitable materials may be used. The clamp strips 82 are of a right-angled section, and extend over the outside of the outer frame body 43 as well as over the top flange 51. The clamp strips 82 provide additional stiffness to the floor section 10, as well as clamping the seal 80 in place. The clamp strips 82 and the seal 80 are held in place by bolts 83 which extend through washers 84 to the captive nuts 55 on the underside of the flange 51. The top plate 14 can thus easily be attached and detached from the base 12 by fastening and unfastening of the bolts 83, even when the floor section is assembled in an array together with other adjacent sections.

The floor section 10 is installed as follows: The panels 40a-d are provided separate to one another for ease of transport and handling. In this embodiment, for example, each panel 40a-d weighs in the region of 28kg, so is easily transportable. The panels 40a-d are fastened together on-site to form the base 12. The cups 74 and springs 70 can be installed prior to transporting the panels 40a-d, or on-site.

The base 12 is secured to the sloping silo foundation (which is typically concrete but could be steel or other building materials) inclined at the desired angle for the floor) with expanding bolts (not shown) or other suitable fixings. The base 12 is orientated so that the second end 10b of the floor section 10 is proximal a conveyor and the first end 10a is raised above the second end 10b. Installation of any cables takes place without the hindrance of the top plate 14. The top plate of this embodiment weighs in the region of 128kg, for example, so manipulating the base 12 is considerably easier without the top plate 14. The top plate 14, with the vibration mechanism 16 attached, is then lowered onto the base 12 and the clamp strips 82 are used to secure the top plate 14 in place.

Lifting eyes (not shown) are used to ease transport and installation of the base 12 and top plate 14. The lifting eyes are attached to the base 12 and/or the panels 40a-d in various apertures provided for bolts, with the bolts removed. Once the part is installed the lifting eyes are removed. The cover 28 can be removed so that a lifting mechanism can be attached to the top plate 14 via the bolts 22 used for the stiffener plate 24. The cover 28 is then replaced after installation.

The captive nuts used throughout the floor section 10 allow the top plate 14 to be connected to the base 12 from above, with no requirement for access to the underside 14b of the top plate 14. The top plate 14 can therefore be easily removed and replaced for maintenance purposes, or to move the floor section 10.

The floor section 10 is installed with a series of like sections 10 or floor sections of different shapes to create a full vibratory floor.

In use, in a silo with a floor sloping towards a dispensing aperture or conveyor, the vibratory floor is operated as follows. The conveyor is activated and a certain amount of material will be removed through gravity, without vibration of the floor sections 10. Once this removal has ceased, floor sections 10 closest to the conveyor are activated, so that material stored on those sections 10 is moved towards the conveyor and removed. When these sections 10 have been cleared, floor sections 10 further from the conveyor are activated, and so on.

There are many advantages to the floor section 10 over the prior art. The springs 70 cannot be fully compressed, so are stressed less and may thus be manufactured from lower cost, standard materials. Relatively inexpensive parallel-sided helical springs can be used, and can be formed from relatively inexpensive material. The springs 70 can be arranged throughout the base 12 to provide a more even amplitude of vibration over the top plate 14, and to transmit vibrations to the foundation, substantially without passing through the frame of the base 12., and can be specifically adjusted for a particular application.

The base 12 can be installed without the top plate 14, increasing convenience of transport, installation and maintenance of the floor section 10. The frame 36 is simple and can be easily produced from inexpensive material such as mild steel. The floor section 10 can be provided in separate panels 40a-d for ease of transport. The circular stiffener plate 24 increases evenness of vibration. The stiffener plate 24 and the vibration mechanism cover 28 arrangement leads to few projections on the top plate 14, reducing the chance of material catching.

Various changes can be made within the scope of the present invention. The base may be made from more or fewer panels. More than one top plate (and associated vibratory member) may be mounted to a single base. Alternative stiffener shapes may be used. Other resilient elements such as leaf springs or synthetic rubber springs may be used. The springs need not be mounted in pockets, but may instead be secured e.g. to a lightweight mesh extending across the base.

## Claims

1. A vibratory floor section comprising:
a generally planar base;
a top plate arranged to overlie at least a portion of the base;
a vibration mechanism configured to vibrate the top plate in relation to the base
at least one resilient device configured to support the top plate on the base, the resilient device having a first end mounted to the base and a second end supporting the top plate, enabling the top plate to adopt a lifted state relative to the base when substantially unloaded and a fully depressed state when loaded above a predetermined amount; and
wherein the first end is mounted below an upper level of the base, such that when the top plate is fully depressed, the resilient device is not fully compressed.

2. A floor section according to claim 1 wherein the or each resilient device is mounted such that the load transmitted from the top plate via the device is directed in use predominantly to a foundation or support upon which the section is mounted, without being transmitted to a main structure of the base.

3. A floor section according to claim 1 or claim 2 further comprising a stop configured to limit movement of the top plate towards the base and transmit load from the top plate when in contact with the stop to a foundation or support upon which the section is mounted, without being transmitted to a main structure of the base, preferably wherein the base comprises the stop.

4. A floor section according to any preceding claim further comprising at least one resilient device housing, preferably, when dependent on claim 3, wherein the resilient device housing comprises the stop.

5. A floor section according to any preceding claim wherein the base further comprises insulation material, preferably, when dependent on claim 3, wherein the insulation material comprises the stop, more preferably wherein the base comprises a frame configured to house the insulation material.

6. A floor section according to claim 5 when dependent from claim 4 wherein the insulation material defines at least one aperture configured to receive the resilient device housing, preferably wherein the resilient device housing comprises a lip configured to overlie an upper surface of the insulation material.

7. A floor section according to any preceding claim wherein the resilient device is a spring, preferably wherein the spring is a parallel-sided helical spring.

8. A floor section according to any preceding claim having a first end and a second end and a plurality of resilient devices, wherein an aggregate spring rate of a resilient device or devices at the first end is greater than an aggregate spring rate of a device or devices at the second end, preferably wherein there is a greater number of resilient devices towards the first end than towards the second end.

9. A floor section according to any preceding claim wherein the vibration mechanism is proximal the floor section second end.

10. A floor section according to any preceding claim wherein the top plate is detachably connected to the base, preferably further comprising a peripheral seal between the top plate and the base, wherein the seal is detachably connected to at least one of the base and top plate by an attachment removable from above the top plate, and more preferably wherein the seal is bonded to the top plate, preferably by adhesive.

11. A floor section according to claim 10 wherein the base comprises at least one captive nut configured for securement of the seal to the base by at least one complementary threaded fastener.

12. A floor section according to any preceding claim wherein the vibration mechanism is mounted to an upper side of the top plate.

13. A floor section according to any preceding claim wherein the top plate comprises a substantially circular stiffener plate, preferably, when dependent upon claim 12, wherein the stiffener plate is positioned on an underside of the main body of the top plate substantially opposite the vibration mechanism, more preferably wherein the stiffener plate is connected to the vibration mechanism, and more preferably wherein the vibration mechanism comprises a cover, and wherein the stiffener plate is connected to the cover.

14. A floor section according to any preceding claim wherein the base comprises insulation material and a frame configured to house said insulation material, preferably wherein the frame comprises an inner frame arranged between panels of the insulation material, and an outer frame arranged about the periphery of the insulation material, and more preferably, when dependent upon claim 13, wherein the insulation material defines a cavity configured to provide clearance for the stiffener plate.

15. A floor section according to any preceding claim wherein the resilient device is compressed to less than 80% or its maximum, preferably less than 70%, more preferably less than 60%, more preferably less than 50% and more preferably less than 40%.
